# EUROPÄISCHE PATENTANMELDUNG

(11) **EP 1 688 699 A1**
(43) Veröffentlichungstag der Anmeldung: **09.08.2006**
(21) Anmeldenummer: 05024755.0
(22) Anmeldetag: 12.11.2005
(51) Int. Cl.: F41H 11/16

(54) **Fahrzeug, insbesondere Konvoisicherungsfahrzeug, mit Mitteln zur Minenräumung**

(30) Priorität: 02.02.2005 DE 102005004913
(71) Anmelder: Rheinmetall Landsysteme GmbH, 24107 Kiel (DE)
(72) Erfinder: Eckhoff, Detlev, 24238 Selent (DE)
(74) Vertreter: Dietrich, Barbara

(57) **Zusammenfassung**

Vorgeschlagen wird ein leicht manövrierbares Fahrzeug (1) zu schaffen, das im Konvoi die volle Geschwindigkeit mitfahren kann, vor Ort aber auch die Aufgabe des Minenräumens erfüllt. Dazu wird ein herkömmliches Trägerfahrzeug (2), beispielsweise ein Mobilkran - Fahrgestell, mit wenigstens einem Front- und wenigstens einem Heckmodul (3, 4, 20, 21) versehen, die in Fahrstellung an- bzw. hochgeklappt sind. In der Arbeitsstellung, d.h., im Auslösemodus, wird dann das gesamte Fahrzeuggewicht zur Bodendruckeinleitung genutzt. Dazu wird das Fahrzeug (2) über die Module (3, 4, 20, 21) angehoben, so dass für das Räumen das Eigengewicht des Trägerfahrzeugs (2) auf die Module (3, 4, 20, 21) verlagert wird, und mittels der Module (3, 4, 20, 21) über das zu räumende Gebiet geführt.

## Beschreibung

Resultierend aus den neuen Einsatzgebieten des Militärs ist der Personen- und Materialschutz für Sicherheitskräfte in Krisenregionen von entscheidender Bedeutung. Speziell der Schutz von Konvois aber auch Installation von temporären Camps in fremdem Gebieten stellt immer wieder ein hohes Risiko bezogen auf das Vorhandensein von Minen, insbesondere Landminen.

Herkömmliche Minenräumsysteme besitzen frontseitig und / oder heckseitig Mittel, mit denen die an der Oberfläche oder verdeckt liegenden Minen ausgelöst werden. Vorrichtungen dieser Art beschreiben u. a. DE 197 02 297 C1, DE 198 13 541 C1, DE 199 42 030 A1, DE 199 42 020 A1, EP 0 929 789 B1, EP 0 991 908 B1 sowie AT 407 572 B.

Auf der Internetseite httr)://www.defense-update.com/events/2004/summary/eurosatory04enaineering.htm wird eine Minenräumfahrzeug SOUVIM der Firma MBDA beschrieben. Das Systemkonzept besteht aus zwei Fahrzeugen mit insgesamt drei Anhängern zum gezielten Auslösen von Druckzünderminen und weist neben dem / den Fahrzeug(en) in Vorderfront als auch im Heckbereich zusätzlich mehrere Spezialräder auf. Der Aufbau und die Funktionsweise dieser Räder sind in der EP 1 429 106 A1 offenbart. Die vier Räder beidseitig einer Radachse dienen zur Überwindung von Hindernissen als auch zum Auslösen der Mine. Stöß eines der Radpaare auf ein Hindernis, wird das nächste Radpaar in Position gebracht, durch Eigengewicht der Räderkonstruktion die Neutralisierung der Mine bewirkt. Ein solches Fahrzeug besitzt eine geringe Fahrgeschwindigkeit. Durch die komplexe Radkonstruktion ist zudem die Monövrierbarkeit eingeschränkt.

Gleichfalls von Nachteil ist, dass die Vielzahl der bekannten Lösungen auf fräsenden oder schlagenden Systemen basieren, die eine plastische Zerstörung der Oberfläche zur Folge haben und somit die Befahrbarkeit für nachfolgende Fahrzeuge stark reduzieren.

Die Erfindung stellt sich die Aufgabe, ein Fahrzeug mit einem Räumsystem aufzuzeigen, welches einen hohen Bodendruck erzeugt und damit sicher stellt, dass alle bekannten Fahrzeugtypen gefahrlos das geräumte Gebiet befahren können und sich zudem als Konvoisicherung eignet.

Gelöst wird die Aufgabe durch die Merkmale des Patentanspruchs 1.

Vorteilhafte Ausführungen sind in den Unteransprüchen enthalten.

Der Erfindung liegt grundsätzlich die Idee zugrunde, ein leicht manövrierbares Fahrzeug zu schaffen, das im Konvoi die volle Geschwindigkeit mitfahren kann, vor Ort aber auch die Aufgabe des Minenräumens erfüllt. Dazu wird vorgeschlagen, vorzugsweise ein herkömmliches Trägerfahrzeug, beispielsweise ein Mobilkran - Fahrgestell, mit wenigstens einem Front- und wenigstens einem Heckmodul zu versehen, die in Fahrstellung an- bzw. hochgeklappt sind. Für das Verbringen in das Gebiet kann so die eigene Geschwindigkeit des Trägerfahrzeuges ausnutzen werden. In der Arbeitsstellung, d.h., im Auslösemodus, wird dann das gesamte Fahrzeuggewicht zur Bodendruckeinleitung genutzt. Dazu wird das Fahrzeug über die Module angehoben, so dass für das Räumen das Eigengewicht des Trägerfahrzeugs auf die Module verlagert wird, und mittels der Module über das zu räumende Gebiet geführt. Die Bodenkontaktfläche wird durch ein spezielles Ketten- oder Radlaufwerk (Modul) unter Aufrechterhaltung der Mobilität minimiert, um eine größtmögliche Bodendruckeinleitung bei einem kleinstmöglichen Gesamtgewicht des Fahrzeugs zu realisieren. Die Module selbst können einen leichteren Aufbau als herkömmlich bekannt besitzen.

In einer bevorzugten Ausführung verfügt das Fahrzeug für die beiden Moden (Arbeitsmodus, Transportmodus) über zwei unabhängige Fahrantriebe. Eines der Fahrantriebe dient dabei für die schnelle Transportfahrt und das andere für den Antrieb der Auslösemodule (Front-und Heckmodule).

Das Fahrzeugkonzept verfügt in Weiterführung der Erfindung über eine stufenlose Arbeitsbreitenverstellung, die durch die Lenkung der im Front- und Heckbereich angeordneten Auslösemodule ausgeführt wird. Front- und Heckmodule werden dabei parallel zueinander verschoben und lassen sich somit von der Arbeitsbreite eines Moduls auf die Arbeitsbreite beider Module nebeneinander im so genannten "Hundegang" betreiben. Diese Arbeitsbreite kann durch weitere Front- und / oder Heckmodule verbreitert werden, wobei die Module zueinander versetzt entweder am Fahrzeug oder am vorherigen Modul angebracht sein können.

In den Auslösemodulen sind, wie bereits ausgeführt, vorzugsweise Eigenantriebe vorgesehen, die beispielsweise Ketten oder Räder der Module antreiben. Anders als herkömmliche Kettenlaufwerke hat in Weiterführung der Erfindung dieser Kettenantrieb seinen Bodenkontakt nicht auf der Lauffläche der Kette sondern nur auf seinen Umlenkrollen. Dieses erhöht den Bodendruck durch Reduzierung der Kontaktfläche unter der Beibehaltung der Kletterfähigkeit von Kettenlaufwerken.

Der prinzipielle Vorteil der vorliegenden Erfindung liegt darin, dass die Beweglichkeit des Fahrzeugs für das Räumen durch Reduzierung des Eigengewichts des Gesamtfahrzeugs erhöht wird und damit dieses Fahrzeug sich auch als Konvoisicherungsfahrzeug eignet. Zudem ist auch ein Räumen vorwärts als auch rückwärts möglich. Das Fahrzeug selbst behält auch bei Defekten an den Auslösemodulen seine gute Beweglich- und Manövrierbarkeit. Das defekte Modul wird wie auch das heile durch das Grundfahrzeug angehoben, so dass sich das Fahrzeug eigenständig an einen sicheren Ort verbringen kann.
Das Lenken im Stand ist sowohl im Transport- als auch im Auslösemodus machbar. Das Fahrzeug besitzt einen relativ kleinen Lenkradius, wobei eine Front- und / oder Hecklenkung möglich ist.

Das beschriebene Fahrzeug zeichnet sich durch ein vielseitiges Einsatzspektrum, geringes Gesamtgewicht sowie eine hohe Gesamtmobilität aus, besitzt eine hohe Transport- und Arbeitsgeschwindigkeit und große Anteile an Gleichteilen.

Anhand von Ausführungsbeispielen mit Zeichnung soll die Erfindung näher erläutert werden. Es zeigt:
- Fig. 1: in einer Seitenansicht ein Fahrzeug in Fahrstellung mit angehobenen Kettenlaufwerken,
- Fig. 2: in einer Seitenansicht das Fahrzeug im Auslösemodus mit abgesenkten Kettenlaufwerken als Auslösemodule,
- Fig. 3: in einer perspektivischen Darstellung das Kettenlaufwerk aus Fig. 1,
- Fig. 4: in einer Seitenansicht das Fahrzeug in Fahrstellung mit angehobenen Radlaufwerken,
- Fig. 5: in einer Seitenansicht das Fahrzeug im Auslösemodus mit abgesenkten Radlaufwerken als Auslösemodule,
- Fig. 6: in einer perspektivischen Darstellung das Radlaufwerk aus Fig. 4,

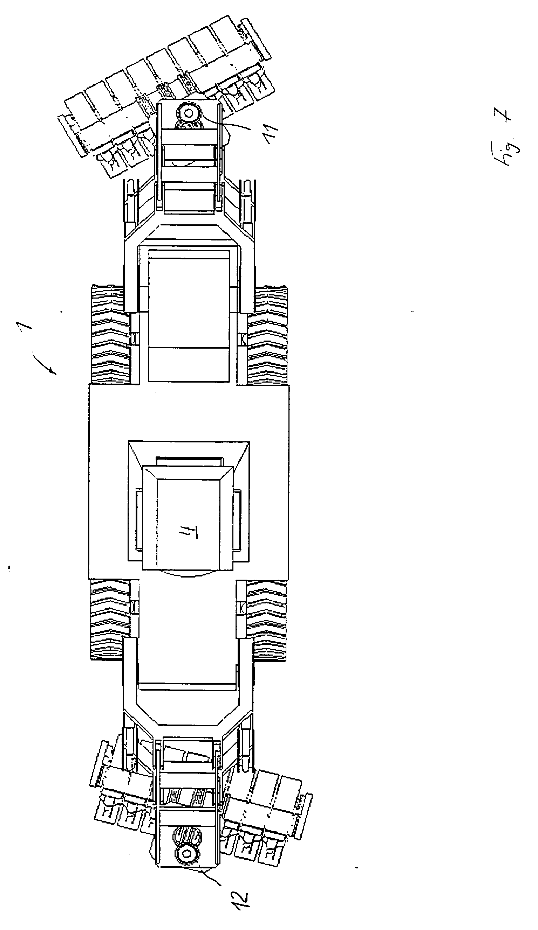

- Fig. 7: eine Draufsicht auf das Fahrzeug,
- Fig. 8: eine Darstellung der Kurvenfahrt in einer Draufsicht auf das Fahrzeug,
- Fig. 9: eine Darstellung der verbreiterten Auslöseposition.

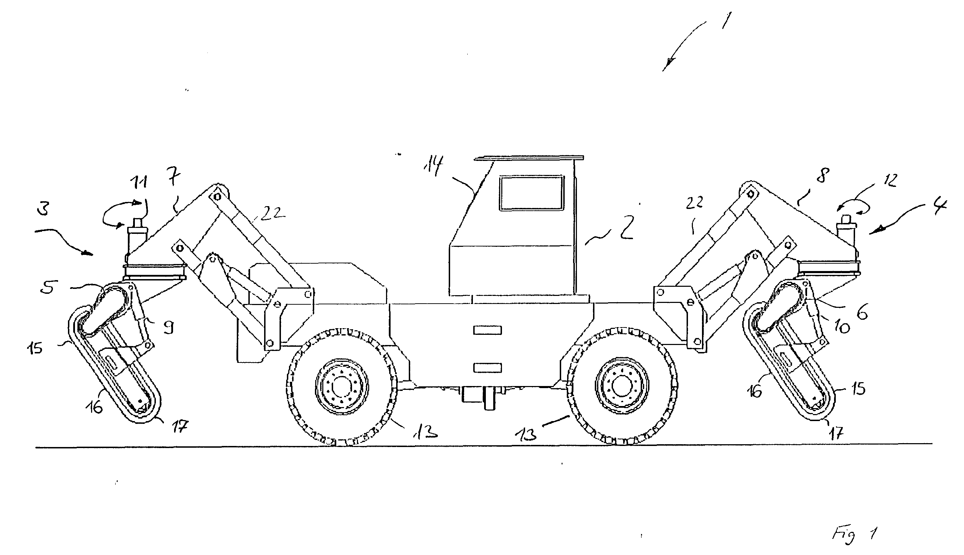

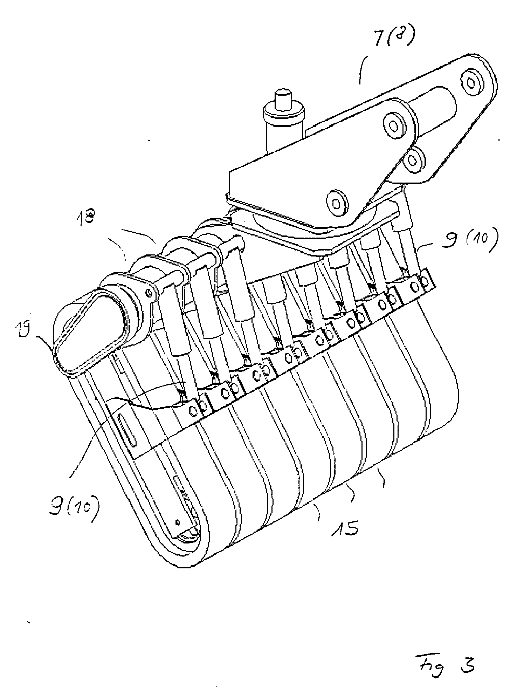

In einem ersten Ausführungsbeispiel nach Fig. 1 ist mit 1 ein Fahrzeug in Transportstellung gekennzeichnet, bestehend hier aus einem Träger- bzw. Basisfahrzeug 2, an welchem frontseitig und heckseitig wenigstens ein Auslösemodul 3, 4, befestigt sind. Beide Module 3, 4 basieren in einer ersten Variante vorzugsweise auf mehrere, nebeneinander angeordnete schmale Kettenlaufwerke 15 (vgl. auch Fig.3). Die Module 3, 4 enthalten im Grundrahmen 5, 6 Eigenantriebe und sind jeweils über einen Schwenk- / Hebemechanismus 22 und Schwenkrahmen 7, 8 mit dem Basisfahrzeug 2 verbunden. Diese Mechanismen haben zum einen die Aufgabe, die Module 3, 4 im Arbeitsmodus zu lenken und darüber hinaus die Arbeitsbreitenverstellung zu realisieren (wird noch ausgeführt).

Zur besseren Bodenkonturanpassung verfügt jedes Kettenlaufwerk 15 über eine separate Aufhängung 18 sowie Federungs- und Dämpfungseinheit 9, 10.

Je Modul 3, 4 sind vorzugsweise zwei hydraulische Fahrantriebe (nicht näher dargestellt) als Eigenantriebe vorgesehen.

Basis des Grund- bzw. Basisfahrzeuges 2 kann ein verwindungssteifes 4x4 Radfahrzeug Fahrgestell sein. Das Grundfahrzeug 2 beinhaltet den Hauptrahmen des Räumgerätes, den Antriebsstrang für den vorzugsweise herkömmlichen Fahrantrieb im Transportmodus, die Energieversorgung für die Fahrantriebe und Lenkungen 11, 12 der Auslösemodule 3, 4. Darüber hinaus beinhaltet das Basisfahrzeug 2 vorzugsweise ein lenkfähiges Allradfahrwerk 13 und beispielsweise eine Fahrerkabine 14, die bei ferngelenkten Fahrzeugen entfallen kann.

Die beiden im Front- und Heckbereich des Basisfahrzeuges 2 angeordneten Auslösemodule 3, 4 basieren, wie bereits ausgeführt, vorzugsweise aber nicht bedingungsgemäß auf nebeneinander angeordneten Kettenlaufwerken 15 (Fig. 3), welche anders als herkömmliche Kettenlaufwerke nicht auf der Lauffläche 16, sondern nur auf Umlenkrollen 17 Bodenkontakt haben. Dieses erhöht den Bodendruck durch Reduzierung der Kontaktfläche unter Beibehaltung der Kletterfähigkeit von Kettenlaufwerken. Jeder der beiden Antriebsmotore treibt in einer bevorzugten Ausführung die halbe Anzahl der Kettenlaufwerke eines der Auslösemodule 3, 4 an, um somit einen Differenzialausgleich zwischen den kurveninneren und den kurvenäußeren Laufwerken 15 zu ermöglichen. Die Kraftübertragung kann prinzipiell über Rollenketten 19 erfolgen.

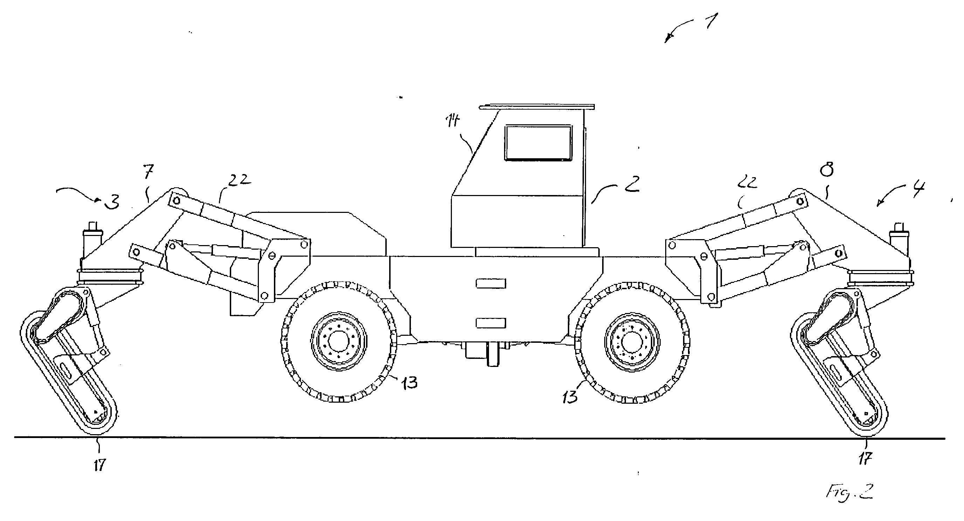

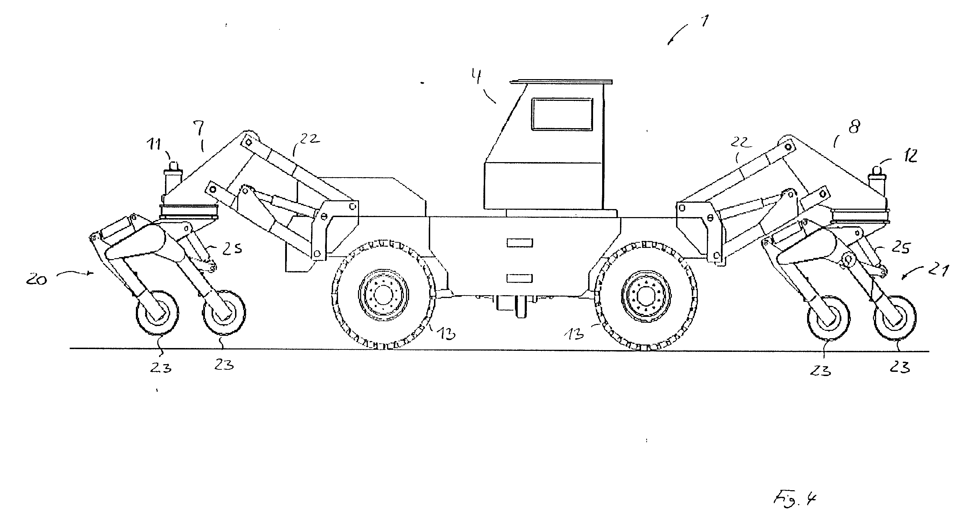

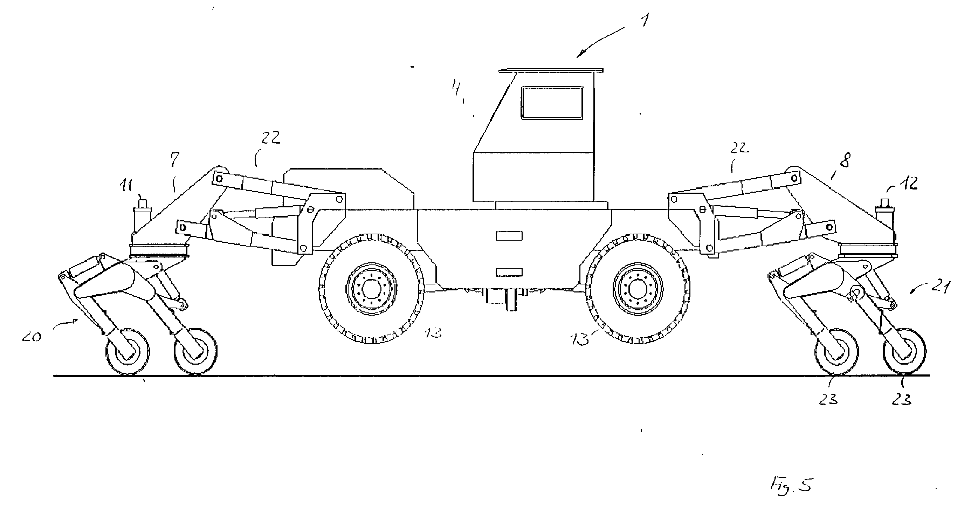

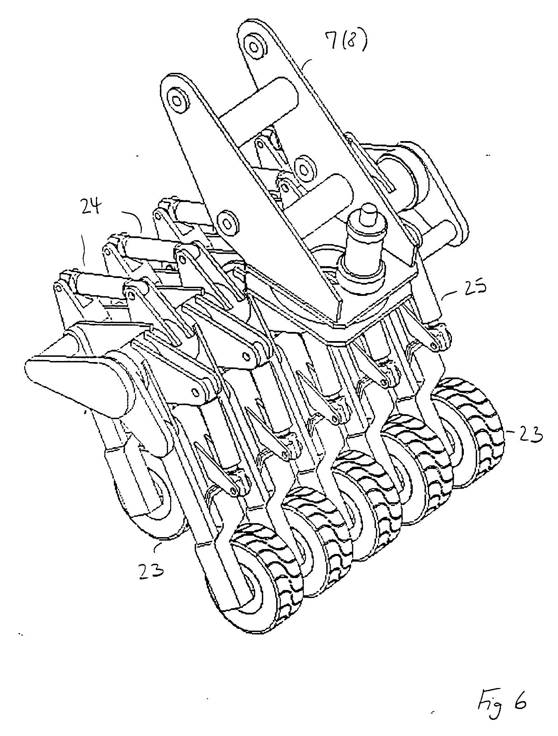

Fig. 2 zeigt das Fahrzeug 1 in der Arbeits- bzw. Auslöseposition. Hierbei sind die Module 3, 4 über die Schwenkmechanismen 7, 8 soweit abgesenkt, dass diese das Basisfahrzeug 2 anheben (wird noch ausgeführt).
Alternativ zu einem Modul 3, 4 aus Kettenlaufwerken 15 lassen sich auch Module 20, 21 auf Basis von Rädern 23 aufbauen und verwenden (Fig. 4, Fig.5). Dabei sind die Räder 23 vorzugsweise mit Einzelradaufhängungen 24 versehen und in zwei Reihen hintereinander jeweils auf Lücke nebeneinander angeordnet (Fig.6). Die Einzelradaufhängungen 24 sind aus einem Achsschenkel aufgebaut und verfügen über eine separate Lagerung zum Rahmen 7, 8 der Auslöseeinheit 20, 21. Jeder der Einzelradaufhängung 24 ist auch hier mit einer Federungs- und Dämpfungseinheit 25 versehen. Der Antrieb der einzelnen Räder 23 erfolgt vergleichbar zum Konzept mit Kettenlaufwerken 15 über zwei im Rahmen untergebrachten Motore und einer transmissionsförmigen Kraftübertragung, z.B. über Rollenkettenantriebe 19 zu den einzelnen Rädern 23.

Innerhalb der Achsschenkel ist eine Sollbruchstelle in Form eines Flansches mit einer schnell montierbaren Verbindung untergebracht. Die Sollbruchstelle ist die Schnittstelle zu den austauschbaren Komponenten nach einer Minen Ansprengung.

Die mechanische Verbindung der beiden Auslösemodule 3, 4 oder 20, 21 mit dem Basisfahrzeug 2 erfolgt über die parallelogrammartige Hebe- bzw. Hubvorrichtung 22. Diese hat die Aufgabe, die Auslösemodule 3, 4 bzw. 20, 21 für den Transportmodus anzuheben bzw. im Auslösemodus das Basisfahrzeug 2 auf diese zu heben.

Im Transportmodus sind beide Auslösemodule 3, 4 bzw. 20, 21 angehoben. Fahrantrieb und Lenkung des Fahrzeugs 1 erfolgen über das Basisfahrzeug 2.

Im Auslösemodus wird das Basisfahrzeug 2 von den wenigsten zwei Auslösemodulen 3, 4 bzw. 20, 21 angehoben. Fahrantrieb und Lenkung erfolgen über die Auslösemodule 3, 4 bzw. 20, 21. Die Lenkung 11, 12, hier ein als Drehschemel oder Scharnier ausgebildetes Gelenk, ermöglicht ein vertikales Schwenken bzw. Lenken der Auslösemodule 3, 4 bzw. 20, 21 zum Basisfahrzeug 2.

Der Minenschutz der Auslösemodule 3, 4 bzw. 20, 21 wird durch das vorsehen verschiedener Sollbruchstellen (nicht näher dargestellt) in unterschiedlichen Schutzklassen ausgeführt. Bei einem größeren Schaden an einem Auslösemodul 3, 4 bzw. 20, 21 kann das gesamte Auslösemodul 3, 4 bzw. 20, 21 über die nicht näher dargestellte Schnellwechseleinrichtungen ausgetauscht werden. Diese sind auch für den Luft- oder Bahntransport sowie den Transport auf LKWs, nutzbar, um Front- und Heckmodul 3, 4 bzw. 20, 21 vom Basisfahrzeug 2 abkuppeln zu können und so leichtere und kleinere Transportmodule zu erhalten.

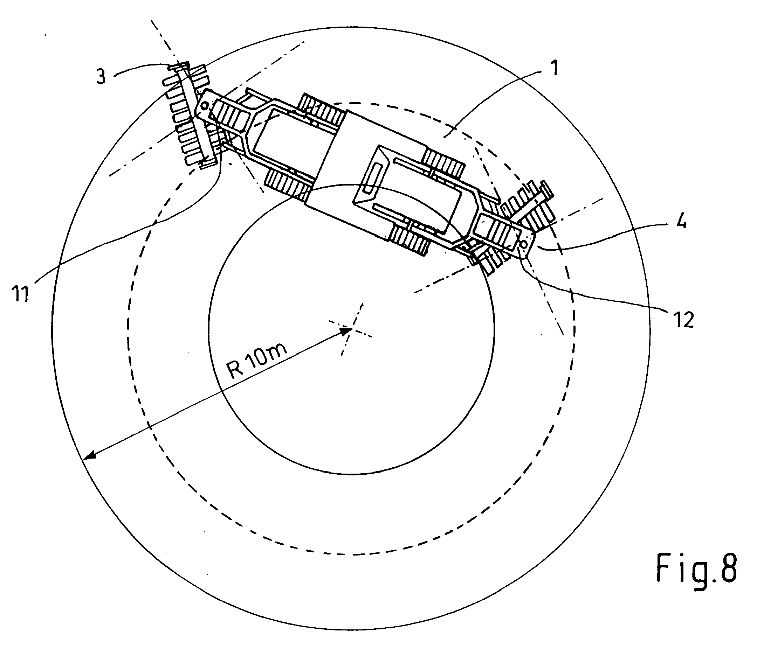

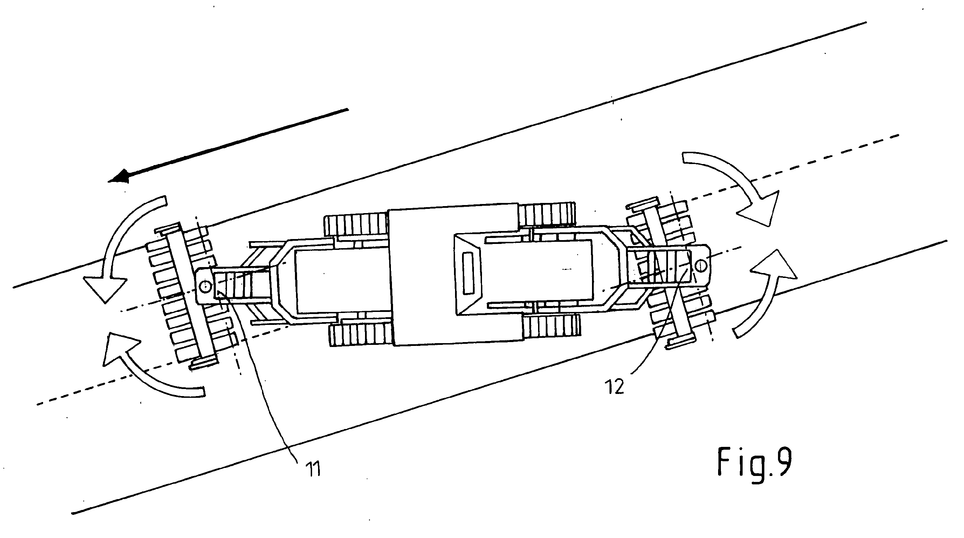

Eine stufenlose Arbeitsbreitenverstellung auch während des Auslösemodus erfolgt durch die Lenkung der im Front- und Heckbereich angeordneten Auslösemodule 3, 4 bzw. 20, 21. Beide Module 3, 4 oder 20, 21 werden dabei parallel zueinander verschoben (Fig. 9). Die maximale Arbeitsbreite ergibt sich dann aus der Breite beider Module 3, 4 bzw. 20, 21 zusammen. Eine Regelungseinheit der Lenkung sorgt für einen Spuranschluss zwischen Front― und Heckmodul 3, 4 bzw. 20, 21 in Abhängigkeit der Arbeitsbreite und einem vorgebbaren Kurvenradius (Fig. 8).

Auf Fahrbahnen mit geringer Tragfähigkeit besteht die Möglichkeit, den Bodendruck der Auslösemodule 3, 4 bzw. 20, 21 zu reduzieren, in dem ein Teil der Gewichtskraft auf das Fahrwerk des Basisfahrzeugs 2 übertragen wird. Ein Regelsystem an den Hubeinrichtungen gewährleistet dabei eine ausreichend hohe verbleibende Gewichtskraft auf die Auslösemodule 3, 4 bzw. 20, 21.

Es versteht sich, dass das Fahrzeug 1 zusätzlich mit weiteren Details ausgerüstet werden kann, die zur Auslösung von anderen, wie beispielsweise intelligenten Minen (z.B. Infrarot-oder Magnetzünderminen) benötigt werden. Außerdem lassen sich Detektions-, Verifikations- und Räumkomponenten, wie beispielsweise GPR-, TNA- Sensoren oder Manipulatoren, auf dem Fahrzeug 1 integrieren, um eine gezielte Verifikation bzw. Räumung an exponierten Positionen wie an Brücken oder Häusern zu ermöglichen. Als Trägerfahrzeug kann gleichfalls ein Kettenfahrzeug anstelle eines Radfahrzeugs verwendet werden.

Die in den Ausführungsbeispielen aufgezeigte Anordnung der Auslösemodule direkt im Frontbereich und im Heckbereich schließt auch ein seitliches Anbringen der Module am Trägerfahrzeug mit ein, wenn diese Anordnung ein Anheben des Trägerfahrzeuges ermöglicht.

Dabei sind dann jeweils zwei frontseitig seitlich und zwei heckseitig seitlich befestigbare Module vorzusehen.

Das hier beschrieben Fahrzeug 1 hat vorrangig die Aufgabe, noch vorhandene Minen auszulösen. Es versteht sich, dass dieses Fahrzeug bei gleichem Aufbau auch für andere Zwecke einsetzbar ist. Denkbar ist die Nutzung dieses Fahrzeugs in unwegsamen Geländen, zur Überwindung von Unwegsamkeiten, ohne dass die Aufgabe der Minenauslösung besteht.

### Bezugszeichenliste

- 1: Fahrzeug
- 2: Basisfahrzeug
- 3: Modul - Frontmodul
- 4: Modul - Heckmodul
- 5: Grundrahmen
- 6: Grundrahmen
- 7: Schwenkrahmen
- 8: Schwenkrahmen
- 9: Dämpfungsmittel
- 10: Dämpfungsmittel
- 11: Lenkeinheit
- 12: Lenkeinheit
- 13: Allradfahrwerk
- 14: Fahrerkabine
- 15: Kettenlaufwerk
- 16: Lauffläche
- 17: Umlenkrollen
- 18: Einzelaufhängung
- 19: Rollenketten
- 20: Modul - Frontmodul
- 21: Modul - Heckmodul
- 22: Hubeinrichtung
- 23: Räder
- 24: Einzelradaufhängung
- 25: Federungs- und Dämpfungsmittel

## Patentansprüche

1. Fahrzeug (1) mit einem Basisfahrzeug (2) mit Mitteln (13) zur Fortbewegung, wobei am Fahrzeug (1) frontseitig und heckseitig in ihrer Höhe zum Basisfahrzeug (2) verschwenkbare Module (3, 4, 20, 21) angebracht sind, mit deren Hilfe das Fahrzeug (1) angehoben und in dieser Position durch die Module (3, 4, 20, 21) weiterbewegt werden kann.

2. Fahrzeug nach Anspruch 1, **dadurch gekennzeichnet, dass** die Module (3, 4, 20, 21) zum Räumen oder Auslösen von Minen dienen.

3. Fahrzeug nach Anspruch 1 oder 2, **dadurch gekennzeichnet, dass** das Basisfahrzeug (2) kann ein verwindungssteifes 4x4 Radfahrzeug - Fahrgestell ist.

4. Fahrzeug nach Anspruch 1 oder 2, **dadurch gekennzeichnet, dass** das Basisfahrzeug (2) ein verwindungssteifes Kettenfahrzeug - Fahrgestell ist.

5. Fahrzeug nach einem der Ansprüche 1 bis 4, **dadurch gekennzeichnet, dass** die Module (3, 4, 20, 21) Eigenantriebe (5, 6) aufweisen und jeweils über einen Schwenk- / Hebemechanismus (22) und Schwenkrahmen (7, 8) mit dem Basisfahrzeug (2) verbunden sind.

6. Fahrzeug nach einem der vorgenannten Ansprüche, **dadurch gekennzeichnet, dass** Lenkungen (11, 12) ein vertikales Schwenken oder Lenken der Module (3, 4, 20, 21) zum Basisfahrzeug (2) ermöglichen.

7. Fahrzeug nach Anspruch 5, **dadurch gekennzeichnet, dass** Lenkungen (11, 12) hydraulisch ausgeführt sind.

8. Fahrzeug nach einem der vorgenannten Ansprüche, **dadurch gekennzeichnet, dass** die Module (3, 4, 20, 21) Sollbruchstellen in unterschiedlichen Schutzklassen aufweisen.

9. Fahrzeug nach einem der vorgenannten Ansprüche, **dadurch gekennzeichnet, dass** das gesamte Modul (3, 4, 20, 21) über Schnellwechseleinrichtungen ausgetauscht werden kann.

10. Fahrzeug nach einem der vorgenannten Ansprüche, **dadurch gekennzeichnet, dass** eine stufenlose Arbeitsbreitenverstellung auch während des Auslösemodus erfolgt, wobei die im Front- und Heckbereich angeordneten Module (3, 4, 20, 21) mittels Lenkung (11, 12) parallel zueinander verschoben werden.

11. Fahrzeug nach einem der vorgenannten Ansprüche, **dadurch gekennzeichnet, dass** die Module (3, 4) auf nebeneinander angeordneten Kettenlaufwerken (15) basieren.

12. Fahrzeug nach Anspruch 11, **dadurch gekennzeichnet, dass** die Kettenlaufwerke (15) auf Umlenkrollen (17) Bodenkontakt haben.

13. Fahrzeug nach Anspruch 11 oder 12, **dadurch gekennzeichnet, dass** jedes Kettenlaufwerk (15) über eine separate Aufhängung (18) sowie Federungs- und Dämpfungseinheit (9, 10) verfügt.

14. Fahrzeug nach einem der Ansprüche 1 bis 10, **dadurch gekennzeichnet, dass** die Module (20, 21) auf Rädern (23) basieren, die vorzugsweise mit Einzelradaufhängungen (24) versehen in zwei Reihen hintereinander jeweils auf Lücke nebeneinander angeordnet sind

15. Fahrzeug nach Anspruch 14, **dadurch gekennzeichnet, dass** die Einzelradaufhängungen (24) aus einem Achsschenkel aufgebaut sind und über eine separate Lagerung zum Rahmen (7, 8) der Auslöseeinheiten (20, 21) verfügen, wobei jeder der Einzelradaufhängung (24) mit einer Federungs- und Dämpfungseinheit (25) versehen sind.
